# EUROPEAN PATENT APPLICATION

(11) **EP 4 421 906 A1**
(43) Date of publication of application: **28.08.2024**
(21) Application number: 22901870.0
(22) Date of filing: 02.12.2022
(51) Int. Cl.: H01M 4/36, H01M 4/62, H01M 4/525, H01M 4/505, C01G 53/00, H01M 10/052, H01M 4/02

(54) **CATHODE ACTIVE MATERIAL AND PREPARATION METHOD THEREFOR**

(30) Priority: 03.12.2021 KR 20210171783
(71) Applicant: LG Chem, Ltd., Yeongdeungpo-gu Seoul 07336 (KR)
(72) Inventor: MOK, Duck Gyun, Daejeon 34122 (KR); LEE, Hyuck, Daejeon 34122 (KR); SON, Min Hee, Daejeon 34122 (KR)
(74) Representative: Hoffmann Eitle
(86) International application number: PCT/KR2022/019507
(87) International publication number: WO 2023/101512

(57) **Abstract**

The present invention relates to a method for producing a positive electrode active material which can minimize the surface degradation of a positive electrode active material which occurs in a washing process, effectively control residual lithium, and form a uniform coating layer on the surface of the positive electrode active material, and a positive electrode active material produced by the method, the method including the steps of: (A) preparing a lithium transition metal oxide; (B) mixing the lithium transition metal oxide and a first washing solution to first wash and then first filter the lithium transition metal oxide; (C) simultaneously second washing and second filtering the lithium transition metal oxide through step (B) using a filter device capable of washing and filtering simultaneously with a second washing solution; and (D) drying the lithium transition metal oxide through step (C), then mixing a coating element-containing raw material with the dried lithium transition metal oxide and heat-treating the mixture to form a coating layer, wherein the coating element-containing raw material includes a boron-containing raw material and at least one lithium-containing raw material selected from among LiOH, Li₂CO₃, and Li₂0.

## Description

### CROSS-REFERENCE TO RELATED APPLICATIONS

This application claims the benefit of Korean Patent Application No. 10-2021-0171783, filed on December 03, 2021, the disclosure of which is incorporated herein in its entirety by reference.

### TECHNICAL FIELD

The present invention relates to a positive electrode active material and a method for producing the same.

### BACKGROUND ART

A nickel-based positive electrode active material is produced by mixing a nickel-based positive electrode active material precursor and a lithium-containing raw material and then sintering the mixture, and in this process, there occurs a limitation in that unreacted lithium-containing raw material and by-products, such as LiOH and Li₂CO₃ remain on the surface of the positive electrode active material.

In particular, there is a limitation in that the nickel-based positive electrode active material containing a high nickel content has a large amount of residual lithium. These by-products may react with an electrolyte solution to cause limitations of long-term performance degradation (e.g., long-term lifetime degradation, resistance increase, etc.) and stability (e.g., gas generation, etc.) of the battery. In addition, a gelation phenomenon may be caused during an electrode slurry preparation process.

In order to prevent this, in the existing process for producing a positive electrode active material, residual lithium has been controlled through a washing process for mixing and sintering a positive electrode active material precursor and a lithium-containing raw material to produce a positive electrode active material, and then washing the positive electrode active material using a washing solution (e.g., deionized water, distilled water, etc.). Meanwhile, in order to effectively control the residual lithium, there is a method of using a large amount of washing solution in the washing process, but there may occur a process limitation due to the use of a large amount of washing solution, and there may occur a limitation in that a performance of the battery is degraded due to the degradation on the surface of the positive electrode active material.

In addition, in the case of a nickel-based positive electrode active material containing a high nickel content, as a charge and discharge cycle of the battery including the nickel-based positive electrode active material continues, contraction and expansion by the movement of lithium in the positive electrode active material are repeated, and thus cracks occur. These cracks have an adverse effect on the long-term performance of the battery.

Therefore, there is a need for a positive electrode active material capable of improving the long-term performance of the battery when applied to the battery while effectively controlling the residual lithium and at the same time suppressing the deterioration of the positive electrode active material, and a method for producing the positive electrode active material.

### DISCLOSURE OF THE INVENTION

### TECHNICAL PROBLEM

An aspect of the present invention provides a positive electrode active material capable of minimizing performance degradation of a battery by minimizing the surface degradation of the positive electrode active material which may occur in a washing process when the positive electrode active material is produced, effectively controlling residual lithium, and forming a uniform coating layer on the surface of the positive electrode active material, and a method for producing the positive electrode active material.

### TECHNICAL SOLUTION

According to an aspect of the present invention, there is provided a method for producing a positive electrode active material, a positive electrode active material, and a positive electrode.
(1) According to an aspect of the present invention, there is provided a method for producing a positive electrode active material, the method including the steps of: (A) preparing a lithium transition metal oxide; (B) mixing the lithium transition metal oxide and a first washing solution to first wash and then first filter the lithium transition metal oxide; (C) simultaneously second washing and second filtering the lithium transition metal oxide through step (B) using a filter device capable of washing and filtering simultaneously with a second washing solution; and (D) drying the lithium transition metal oxide through step (C), then mixing a coating element-containing raw material with the dried lithium transition metal oxide and heat-treating the mixture to form a coating layer, wherein the coating element-containing raw material includes a boron-containing raw material and at least one lithium-containing raw material selected from among LiOH, Li₂CO₃, and Li₂O.
(2) In (1) above of the present invention, there is provided the method for producing a positive electrode active material, wherein the lithium transition metal oxide contains 70 mol% or more of nickel among the total metals other than lithium.
(3) In (1) or (2) above of the present invention, there is provided the method for producing a positive electrode active material, wherein the content of the second washing solution is 10 parts by weight to 50 parts by weight with respect to 100 parts by weight of the first washing solution.
(4) In any one of (1) to (3) above of the present invention, there is provided the method for producing a positive electrode active material, wherein the content of the first washing solution is 50 parts by weight to 150 parts by weight with respect to 100 parts by weight of the lithium transition metal oxide.
(5) In any one of (1) to (4) above of the present invention, there is provided the method for producing a positive electrode active material, wherein the content of the second washing solution is 5 parts by weight to 50 parts by weight with respect to 100 parts by weight of the lithium transition metal oxide.
(6) In any one of (1) to (5) above of the present invention, there is provided the method for producing a positive electrode active material, wherein the sum of the content of the first washing solution and the content of the second washing solution is 55 parts by weight to 150 parts by weight with respect to 100 parts by weight of the lithium transition metal oxide.
(7) In any one of (1) to (6) above of the present invention, there is provided the method for producing a positive electrode active material, wherein at least one lithium-containing raw material selected from among LiOH, Li₂CO₃, and Li₂O is added in a weight of 160 ppm to 500 ppm with respect to the dried lithium transition metal oxide.
(8) According to another aspect of the present invention, there is provided a positive electrode active material including a lithium transition metal oxide and a coating layer formed on the lithium transition metal oxide, wherein the coating layer includes a Li-B-O solid solution, and the Li-B-O solid solution contains 50-60 wt% of BO₂, 2-7 wt% of LiB₂O₃, and 1-5 wt% of Li₂B₃O₆.
(9) In (8) above of the present invention, there is provided the positive electrode active material, wherein the lithium transition metal oxide contains 70 mol% or more of nickel among the total metals other than lithium.
(10) In (8) or (9) above of the present invention, there is provided the positive electrode active material, wherein the ratio of LiB₂O₃ content to BO₂ content is 0.05-0.20.
(11) In any one of (8) to (10) above of the present invention, there is provided the positive electrode active material, wherein the ratio of LiB₂O₃ content to BO₂ content is 0.01-0.10.
(12) According to another aspect of the present invention, there is provided a positive electrode including the positive electrode active material according to any one of (8) to (11) above.

### ADVANTAGEOUS EFFECTS

According to the present invention, the surface of the positive electrode active material is controlled through the washing process in step (C), and a coating layer is formed on the positive electrode active material, of which the surface is controlled, in step (D), by using a boron-containing raw material and at least one lithium-containing raw material selected from among LiOH, Li₂CO₃, and Li₂O, thereby minimizing the surface degradation of the positive electrode active material which occurs in the washing process, effectively controlling residual lithium, and forming a uniform coating layer on the surface of the positive electrode active material. Accordingly, the battery using the positive electrode active material produced by the method according to the present invention can have excellent performance, particularly, excellent electrochemical performance and thermal stability.

### BEST MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Hereinafter, the present invention will be described in more detail.

### Method for Producing Positive Electrode Active Material

The present inventors have found that the surface degradation of the positive electrode active material which occurs in the washing process during the process for producing the positive electrode active material may be minimized, the residual lithium may be effectively controlled, and a uniform coating layer may be formed on the surface of the positive electrode active material, thereby leading to the completion of the present invention.

A method for producing a positive electrode active material according to the present invention includes the steps of: (A) preparing a lithium transition metal oxide; (B) mixing the lithium transition metal oxide and a first washing solution to first wash and then first filter the lithium transition metal oxide; (C) simultaneously second washing and second filtering the lithium transition metal oxide through step (B) using a filter device capable of washing and filtering simultaneously with a second washing solution; and (D) drying the lithium transition metal oxide through step (C), then mixing a coating element-containing raw material with the dried lithium transition metal oxide and heat-treating the mixture to form a coating layer. In this case, the coating element-containing raw material includes a boron-containing raw material and at least one lithium-containing raw material selected from among LiOH, Li₂CO₃, and Li₂O.

Hereinafter, each step of the method for producing a positive electrode active material will be described in detail.

### Step (A)

The method for producing a positive electrode active material according to the present invention includes a step of preparing a lithium transition metal oxide.

The step of preparing a lithium transition metal oxide may include a step of mixing a positive electrode active material precursor with a lithium-containing raw material and sintering the mixture to produce the lithium transition metal oxide.

The positive electrode active material precursor may have, for example, a composition represented by Formula A or Formula B below:

[Formula A] [NiₓCo_{y}M1_{z}M2_{w}](OH)₂

[Formula B] [NiₓCo_{y}M1_{z}M2_{w}]O·OH

In Formula A and Formula B above, M1 may be at least one selected from among Mn and Al, and M2 may be at least one selected from among Zr, B, W, Mo, Cr, Nb, Mg, Hf, Ta, La, Ti, Sr, Ba, Ce, F, P, S, and Y.

x above denotes an atomic fraction of nickel among the metallic elements in the precursor, and may satisfy 0.7≤x<1, 0.7≤x≤0.98, or 0.7≤x≤0.95.

y above denotes an atomic fraction of cobalt among the metallic elements in the precursor, and may satisfy 0<y≤0.3, or 0.01≤y≤0.3.

z above denotes an atomic fraction of an M1 element among the metallic elements in the precursor, and may satisfy 0<z≤0.3 or 0.01≤z≤0.3.

w above denotes an atomic fraction of an M2 element among the metallic elements in the precursor, and may satisfy 0≤w≤0.2, 0≤w≤0.1, 0≤w≤0.05, or 0≤w≤0.02.

The lithium-containing raw material may be, for example, at least one selected from the group consisting of lithium carbonate (Li₂CO₃), lithium hydroxide (LiOH), LiNO₃, CH₃COOLi, and Li₂(COO)₂, and preferably, may be lithium carbonate (Li₂CO₃), lithium hydroxide (LiOH), or a combination thereof.

The positive electrode active material precursor and the lithium-containing raw material may be mixed in a molar ratio of 1:1 to 1:1.625, or 1:1 to 1:1.15 during the preparation of the positive electrode active material. In a case in which the lithium-containing raw material is mixed in a molar ratio of less than the above range, there is a concern that capacity of the positive electrode active material is reduced, and, in a case in which the lithium-containing raw material is mixed in a molar ratio of greater than the above range, unreacted lithium (Li) remains as a by-product, and capacity reduction and separation of positive electrode active material particles (causing a positive electrode active material coalescence phenomenon) may occur after sintering.

The sintering may be performed in a temperature range of 700 °C to 1,000 °C. In a case in which the sintering temperature is less than 700 °C, since the raw materials may remain in the particles due to an insufficient reaction, high-temperature stability of the battery may be reduced, and structural stability may be reduced due to decreases in volume density and crystallinity. Meanwhile, when the sintering temperature is higher than 1,000 °C, the particles may grow non-uniformly, and it is difficult to disintegrate the particles, so that capacity reduction, etc. may occur. Meanwhile, in consideration of the particle size control, capacity, and stability of the produced positive electrode active material and a reduction in lithium-containing by-products, the sintering temperature may be more preferably in a range of 700 °C to 980 °C.

The sintering may be performed for 5-35 hours. In a case in which the sintering time is less than 5 hours, since reaction time is too short, it may be difficult to obtain a high crystalline positive electrode active material, and, in a case in which the sintering time is greater than 35 hours, the size of the particles may be excessively increased, and production efficiency may be reduced.

According to the present invention, the lithium transition metal oxide contains 70 mol% or more of nickel among the total metals other than lithium. Specifically, the lithium transition metal oxide may have a composition represented by Formula 1 below:

[Formula 1] Li₁₊ₐNiₓ₁CO_{y1}M1_{z1}M2_{w1}O₂

In Formula 1 above, 0≤a≤0.3, 0.7≤x1<1.0, 0<y1≤0.3, 0<z1≤0.3, 0≤w1≤0.2, x1+y1+z1+w1=1, and M1 may be at least one selected from among Mn and Al, and M2 may be at least one selected from among Zr, B, W, Mo, Cr, Nb, Mg, Hf, Ta, La, Ti, Sr, Ba, Ce, F, P, S, and Y.

x1 above denotes an atomic fraction of nickel among the metallic elements other than the lithium in the lithium transition metal oxide, and may satisfy 0.7≤x1<1, 0.7≤x1≤0.98, or 0.7≤x1≤0.95.

y1 above denotes an atomic fraction of cobalt among the metallic elements other than the lithium in the lithium transition metal oxide, and may satisfy 0<y1≤0.3 or 0.01≤y1≤0.3.

z1 above denotes an atomic fraction of an M1 element among the metallic elements other than the lithium in the lithium transition metal oxide, and may satisfy 0<z1≤0.3 or 0.01≤z1≤0.3.

w1 above denotes an atomic fraction of an M2 element among the metallic elements other than the lithium in the lithium transition metal oxide, and may satisfy 0≤w1≤0.2, 0≤w1≤0.1, 0≤w1≤0.05, or 0≤w1≤0.02.

### Step (B) and Step (C)

The method for producing a positive electrode active material according to the present invention includes the steps of: mixing the lithium transition metal oxide and a first washing solution to first wash and then first filter the lithium transition metal oxide (step (B)); and simultaneously second washing and second filtering the lithium transition metal oxide through step (B) using a filter device capable of washing and filtering simultaneously with a second washing solution (step (C)).

The case of simultaneously second washing and second filtering the lithium transition metal oxide through step (B) using a filter device capable of washing and filtering simultaneously with a second washing solution easily removes ions remaining on the surface of the positive electrode active material than the case of repeating twice of mixing the lithium transition metal oxide and the washing solution to wash and then filter the mixture like step (B) so that it is advantageous to prevent the surface degradation of the positive electrode active material and reduce residual lithium.

In addition, the case of sequentially performing step (B) and step (C) may remove unnecessary ions on the surface of the positive electrode active material faster than the case of performing step (C) first and then step (B).

The filtration device capable of washing and filtering simultaneously may be a funnel filter, a filter press, or the like, but is not limited thereto.

In this case, the content of the second washing solution may be 10 parts by weight to 50 parts by weight with respect to 100 parts by weight of the first washing solution. When the content of the second washing solution satisfies the above range, the surface degradation of the positive electrode active material which occurs in the washing process may be minimized, and residual ions on the surface of the positive electrode active material may be effectively controlled. Accordingly, the battery using the positive electrode active material produced by the method according to the present invention can have excellent performance, particularly, excellent electrochemical performance and thermal stability.

The present invention includes step (B) and step (C) as a washing process, thereby reducing the amount of washing solution used as well as minimizing the surface degradation which occurs in the washing process and effectively controlling residual lithium. Accordingly, the battery using the positive electrode active material produced by the method according to the present invention may have excellent performance.

According to the present invention, even when the lithium transition metal oxide containing a high nickel content is used as in Formula 1, if the washing process according to the present invention is performed, the surface degradation of the positive electrode active material which occurs in the washing process may be minimized and the residual lithium may be effectively controlled, thereby providing a positive electrode active material having excellent performance.

According to the present invention, the content of the first washing solution may be 50 parts by weight to 150 parts by weight, specifically, 50 parts by weight to 100 parts by weight with respect to 100 parts by weight of the lithium transition metal oxide. When the content of the first washing solution is within the above range, unnecessary ions on the surface of the positive electrode active material may be sufficiently removed, and the lithium in the positive electrode active material may be prevented from being released.

According to the present invention, the content of the second washing solution may be 5 parts by weight to 50 parts by weight, specifically, 10 parts by weight to 30 parts by weight with respect to 100 parts by weight of the lithium transition metal oxide. In addition, the sum of the content of the first washing solution and the content of the second washing solution may be 55 parts by weight to 150 parts by weight, specifically, 60 parts by weight to 130 parts by weight, and more specifically 60 parts by weight to 125 parts by weight, with respect to 100 parts by weight of the lithium transition metal oxide. In this case, residual ions on the surface of the positive electrode active material may not only be effectively removed, but the surface degradation of the positive electrode active material which occurs in the washing process may also be minimized.

The solvent of the first washing solution and the second washing solution may be each independently at least one selected from among deionized water, distilled water, ethanol, and industrial water. The solvent of the first washing solution and the second washing solution may be specifically deionized water and/or distilled water. In this case, since lithium is easily dissolved, it may be advantageous to remove residual lithium present on the surface.

The first washing may be performed for 5 minutes to 30 minutes, specifically 5 minutes to 20 minutes, and more specifically 5 minutes to 15 minutes. When the first washing time is within the above range, only residual lithium on the surface is removed, and dissolution of lithium intercalated into the surface may be suppressed as much as possible.

The first washing may be performed at 5 °C to 30 °C, particularly, 5 °C to 25 °C. When the first washing is performed under the temperature within the above range, there is an advantage in that it is advantageous to control lithium carbonate, which is easily dissolved in the washing solution at a low temperature.

The second washing may be performed for 1 minute to 30 minutes, specifically 1 minute to 20 minutes, and more specifically 1 minute to 15 minutes. In addition, the second washing may be performed at 5 °C to 30 °C, specifically, 5 °C to 25 °C. When the time and performance temperature of the second washing process are within the above range, there is an advantage in that it is advantageous to control ions present on the surface of the positive electrode active material.

### Step (D)

The method for producing a positive electrode active material according to the present invention includes the steps of: drying the lithium transition metal oxide through step (C), and then mixing a coating element-containing raw material with the dried lithium transition metal oxide and heat-treating the mixture to form a coating layer. The coating element-containing raw material includes a boron-containing raw material and at least one lithium-containing raw material selected from among LiOH, Li₂CO₃, and Li₂O. Accordingly, a positive electrode active material in which a coating layer including a Li-B-O solid solution is formed on the surface of the lithium transition metal oxide may be produced. In this case, the Li-B-O solid solution may contain 50 wt% to 60 wt% of BO₂, 2 wt% to 7 wt% of LiB₂O₃, and 1 wt% to 5 wt% of Li₂B₃O₆.

The drying process is a process for removing moisture from the positive electrode active material containing moisture through the washing process, and may be drying for 12 hours or more at 100 °C to 150 °C.

The boron-containing raw material may be an acetate, a nitrate, a sulfate, a halide, a sulfide, a hydroxide, an oxide, or an oxyhydroxide containing B, and may be, for example, boric acid (H₃BO₃).

The boron-containing raw material may be added in a weight of 200 ppm to 2,000 ppm with respect to the dried lithium transition metal oxide. When the content of the boron-containing raw material is within the above range, capacity of the battery may be improved, and, since the formed coating layer may suppress a direct reaction between an electrolyte solution and the lithium transition metal oxide, long-term performance characteristics of the battery may be improved.

According to the present invention, the at least one lithium-containing raw material selected from LiOH, Li₂CO₃, and Li₂O may be added in a weight of 160 ppm to 500 ppm, specifically 160 ppm to 400 ppm, more specifically 160 ppm to 300 ppm, with respect to the dried lithium transition metal oxide. When the content of at least one lithium-containing raw material selected from among LiOH, Li₂CO₃, and Li₂O is within the above range, all of the boron-containing raw materials may participate in the reaction (i.e., both the lithium-containing raw material and the boron-containing raw material react), so that the reactant may not remain, and the coating layer including the Li-B-O solid solution may be better formed.

The coating element-containing raw material may further include an acetate, a nitrate, a sulfate, a halide, a sulfide, a hydroxide, an oxide, or an oxyhydroxide containing Zr, W, Mo, Cr, Nb, Mg, Hf, Ta, La, Ti, Sr, Ba, Ce, F, P, S, Y, or a combination thereof, as necessary.

The heat treatment may be performed at 200 °C to 400 °C. In a case in which the heat treatment temperature is within the above range, a coating layer may be formed while maintaining structural stability of the transition metal oxide. The heat treatment may be performed for 1 hour to 10 hours. In a case in which the heat treatment time is within the above range, a suitable coating layer may be formed, and production efficiency may be improved.

### Positive Electrode Active Material

Also, the present invention may provide a positive electrode active material produced by the above-described method.

Specifically, the positive electrode active material according to the present invention may include a lithium transition metal oxide and a coating layer formed on the lithium transition metal oxide, and the coating layer includes a Li-B-O solid solution, and the Li-B-O solid solution contains 50-60 wt% of BO₂, 2-7 wt% of LiB₂O₃, and 1-5 wt% of Li₂B₃O₆. In this case, the coating layer is stably present, the battery including the positive electrode active material has excellent electrochemical performance and thermal stability.

The Li-B-O solid solution may further include LiBO₃, LiB₂O₄, B₃O₅, and the like other than BO₂, LiB₂O₃, and Li₂B₃O₆. In this case, LiBO₃, LiB₂O₄, and B₃O₅ may be included in the LiB-0 solid solution in a content of 2-3 wt%, 30-35 wt%, and 2-7 wt%, respectively.

According to the present invention, the lithium transition metal oxide may contain 70 mol% or more of nickel among the total metals other than lithium. Specifically, the lithium transition metal oxide may have a composition represented by Formula 1 as described above in the method of producing a positive electrode active material.

According to the present invention, the ratio of LiB₂O₃ content to BO₂ content may be 0.05 to 0.20. When the ratio of LiB₂O₃ content to BO₂ content is within the above range, the coating layer of the battery including the positive electrode active material according to the present invention is stably present, and thus the battery including the positive electrode active material has excellent electrochemical performance and thermal stability. The ratio of LiB₂O₃ content to BO₂ content may be specifically 0.07 to 0.12 in terms of further improving the rate characteristics, the life characteristics, and the gas generation of the battery.

According to the present invention, the ratio of LiB₂O₃ content to BO₂ content may be 0.01 to 0.10. When the ratio of LiB₂O₃ content to BO₂ content is within the above range, the coating layer is stably present, and thus the battery including the positive electrode active material has excellent electrochemical performance and thermal stability. The ratio of LiB₂O₃ content to BO₂ content may be specifically 0.02 to 0.05 in terms of further improving the rate characteristics, the life characteristics, and the gas generation of the battery.

The coating layer may have a thickness of 5 nm to 10 nm. In this case, since the coating layer has a thin and uniform surface, the rate characteristics or the life characteristics of the battery including the positive electrode active material according to the present invention may be improved.

### Positive Electrode

Also, the present invention may provide a positive electrode for a lithium secondary battery which includes the above-described positive electrode active material.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, sintered carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as a film, a sheet, a foil, a net, a porous body, a foam body, and a non-woven fabric body.

The positive electrode active material layer may include a conductive agent and a binder in addition to the positive electrode active material.

In this case, the positive electrode active material may be included in a content of 80 wt% to 99 wt%, more specifically, 85 wt% to 98 wt% with respect to the total weight of the positive electrode active material layer. When the positive electrode active material is included in a content within the above range, excellent capacity characteristics may be obtained.

In this case, the conductive agent is used to provide conductivity to the electrode, and any conductive agent may be used without particular limitation as long as it has electron conductivity without causing adverse chemical changes in the battery to be constituted. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% with respect to the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% with respect to the total weight of the positive electrode active material layer.

The positive electrode may be prepared according to a typical method of preparing a positive electrode except that the above-described positive electrode active material is used. Specifically, a positive electrode material mixture, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, the type and content of the positive electrode active material, the binder, and the conductive are the same as those previously described. Also, as another method, the positive electrode may be prepared by casting the positive electrode material mixture on a separate support and then laminating a film separated from the support on the positive electrode collector.

The solvent may be a solvent normally used in the art. The solvent may include dimethyl sulfoxide (DMSO), isopropyl alcohol, N-methylpyrrolidone (NMP), acetone, or water, and any one alone thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

### Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, sintered carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and as in the case of the positive electrode collector, microscopic irregularities may be formed on the surface of the negative electrode collector to enhance the adhesion of a negative electrode active material. The negative electrode collector, for example, may be used in various shapes such as a film, a sheet, a foil, a net, a porous body, a foam body, and a non-woven fabric body.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOβ(0<β<2), SnO2, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% with respect to the total weight of the negative electrode active material layer.

The binder is a component that assists in the binding between the conductive agent, the active material, and the current collector, wherein the binder is typically added in an amount of 0.1 wt% to 10 wt% with respect to the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less with respect to the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path for lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, and LiN(CF₃SO₂)₂ may be used as the lithium salt. The lithium salt may be used in a concentration range of 0.1 M to 2.0 M. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained, and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% with respect to the total weight of the electrolyte.

The lithium secondary battery including the positive electrode active material according to the present invention as describe above stably exhibits excellent discharge capacity, output properties, and lifespan properties, and thus, are useful for portable devices such as a mobile phone, a notebook computer, and a digital camera, and in the field of electric cars such as a hybrid electric vehicle (HEV).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, a coin type, or the like may be used.

The lithium secondary battery according to the present invention may not only be used in a battery cell that is used as a power source of a small device, but may also be used as a unit cell in a medium and large sized battery module including a plurality of battery cells.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Preparation Example

A precursor having a composition represented by Ni_{0.86}Co_{0.05}Mn_{0.07}Al_{0.02}(OH)₂ and LiOH were mixed in a mole ratio of 1:1.05, and then sintered in an oxygen atmosphere at 780 °C for 10 hours, thereby preparing a lithium transition metal oxide having a composition represented by Li [Ni_{0.86}Co_{0.05}Mn_{0.07}Al_{0.02}]O₂.

### Examples and Comparative Examples

### Example 1

With respect to 100 parts by weight of the prepared lithium transition metal oxide in Preparation Example, 100 parts by weight of deionized water (a first washing solution) was mixed and first washed at 25 °C for 5 minutes, and then first filtered for 5 minutes using a filter press. Thereafter, with respect to 100 parts by weight of the prepared lithium transition metal oxide, 25 parts by weight of deionized water (a second washing solution) was permeated at 25 °C for 2 minutes using the filter press, followed by second washing and second filtering, and dried in a vacuum oven at 130 °C for 12 hours or more. The dried lithium transition metal oxide was mixed with H₃BO₃ and LiOH in a weight of 1,000 ppm and 160 ppm with respect to the dried lithium transition metal oxide, respectively, and then heat-treated at 300 °C for 5 hours in an air atmosphere to produce a positive electrode active material in which the coating layer including the Li-B-O solid solution was formed on the lithium transition metal oxide.

### Example 2

A positive electrode active material was produced in the same manner as in Example 1, except that the dried lithium transition metal oxide was mixed with H₃BO₃ and LiOH in a weight of 1,000 ppm and 224 ppm with respect to the dried lithium transition metal oxide, respectively.

### Example 3

A positive electrode active material was produced in the same manner as in Example 1, except that the dried lithium transition metal oxide was mixed with H₃BO₃ and LiOH in a weight of 1,000 ppm and 228 ppm with respect to the dried lithium transition metal oxide, respectively.

### Comparative Example 1

With respect to 100 parts by weight of the prepared lithium transition metal oxide in Preparation Example, 100 parts by weight of deionized water was mixed and washed at 25 °C for 5 minutes, then filtered for 5 minutes using a filter press, and dried in a vacuum oven at 130 °C for 12 hours or more. The dried lithium transition metal oxide was mixed with H₃BO₃ in a weight of 1,000 ppm with respect to the dried lithium transition metal oxide, and then heat-treated at 300 °C for 5 hours in an air atmosphere to produce a positive electrode active material in which the coating layer including the LiB-O solid solution was formed on the lithium transition metal oxide.

### Comparative Example 2

With respect to 100 parts by weight of the prepared lithium transition metal oxide in Preparation Example, 100 parts by weight of deionized water was mixed and washed at 25 °C for 5 minutes, then filtered for 5 minutes using a filter press, and dried in a vacuum oven at 130 °C for 12 hours or more. The dried lithium transition metal oxide was mixed with H₃BO₃ and LiOH in a weight of 1,000 ppm and 224 ppm with respect to the dried lithium transition metal oxide, and then heat-treated at 300 °C for 5 hours in an air atmosphere to produce a positive electrode active material in which the coating layer including the Li-B-O solid solution was formed on the lithium transition metal oxide.

### Comparative Example 3

A positive electrode active material was produced in the same manner as in Example 1, except that the dried lithium transition metal oxide was mixed with only H₃BO₃ in a weight of 1,000 ppm with respect to the dried lithium transition metal oxide.

### Comparative Example 4

With respect to 100 parts by weight of the prepared lithium transition metal oxide in Preparation Example, 100 parts by weight of deionized water (a first washing solution) was mixed and first washed at 25 °C for 5 minutes, and then first filtered for 5 minutes using a filter press. Thereafter, with respect to 100 parts by weight of the lithium transition metal oxide, 25 parts by weight of deionized water (a second washing solution) was mixed and second washed at 25 °C for 5 minutes, then second filtered for 5 minutes using a filter press, and dried in a vacuum oven at 130 °C for 12 hours or more. The dried lithium transition metal oxide was mixed with H₃BO₃ and LiOH in a weight of 1,000 ppm and 160 ppm with respect to the dried lithium transition metal oxide, respectively, and then heat-treated at 300 °C for 5 hours in an air atmosphere to produce a positive electrode active material in which the coating layer including the Li-B-O solid solution was formed on the lithium transition metal oxide.

**[Table 1]**

| | Content of first washing solution with respect to 100 parts by weight of positive electrod e active material (Parts by weight) | Content of second washing solution with respect to 100 parts by weight of positive electrode active material (Parts by weight) | Content of total washing solution with respect to 100 parts by weight of positive electrode active material (Parts by weight) | Conten t of H₃BO₃ with respec t to dried lithiu m transi tion metal oxide (ppm) | Conten t of LiOH with respec t to dried lithiu m transi tion metal oxide (ppm) |
|---|---|---|---|---|---|
| Example 1 | 100 | 25 | 125 | 1000 | 160 |
| Example 2 | 100 | 25 | 125 | 1000 | 244 |
| Example 3 | 100 | 25 | 125 | 1000 | 288 |
| Comparative Example 1 | - | | 100 | 1000 | - |
| Comparative Example 2 | - | | 100 | 1000 | 224 |
| Comparative Example 3 | 100 | 25 | 125 | 1000 | - |
| Comparative Example 4 | 100 | 25 (however, not simultaneo usly washing and filtering) | 125 | 1000 | 150 |

### Experimental Examples

### Experimental Example 1: Confirmation of type and content of Li-B-O solid solution

The surfaces of the positive electrode active materials produced in Examples and Comparative Examples were analyzed to confirm the type and content of the Li-B-O solid solution, and the results are shown in Table 2 below. Specifically, the surface of the positive electrode active material was analyzed by the Secondary Ion Mass Spectrometry (SIMS), and TOF-SIMS5 made by IonTOF, Technologies GmbH (Germany) was used, and the analysis was performed under the following conditions.

### Negative mode:

1) Primary Ion: Bi3⁺ 30keV
2) Field of View: 100µm×100µm
3) raster size 256µm×256µm
4) cycle time: 100µs
5) Scan: 15 times

**[Table 2]**

| | Li-B-O solid solution (%) | | | | | | Rati o of LiB₂ O₃ cont ent to BO₂ cont ent | Rati o of Li₂B₃ O₆ cont ent to BO₂ cont ent |
|---|---|---|---|---|---|---|---|---|
| Type | BO₂ | LiBO 3 | LiB₂ O₃ | LiB₂ O₄ | B₃O₅ | Li₂B₃ O₆ | | |
| mass | 43 | 66 | 77 | 93 | 113 | 143 | | |
| Example 1 | 58.1 | 2.2 | 2.9 | 30.8 | 5.4 | 0.6 | 0.05 | 0.01 |
| Example 2 | 57.4 | 2.2 | 5.6 | 30.4 | 3.0 | 1.4 | 0.1 | 0.02 |
| Example 3 | 49.0 | 2.5 | 9.8 | 31 | 2.1 | 5.6 | 0.2 | 0.1 |
| Comparative Example 1 | 42.2 | 2.3 | 8.4 | 34.1 | 6.8 | 6.2 | 0.21 | 0.15 |
| Comparative Example 2 | 40.3 | 2.8 | 7.0 | 31.3 | 6.5 | 6.0 | 0.17 | 0.15 |
| Comparative Example 3 | 43.0 | 2.5 | 8.4 | 33.1 | 7.0 | 6.0 | 0.20 | 0.14 |
| Comparative Example 4 | 44.5 | 2.3 | 8.0 | 32.4 | 7.6 | 5.2 | 0.18 | 0.12 |

### Experimental Example 2: Half-cell Characteristic Evaluation

Lithium secondary batteries were prepared using the positive electrode active materials produced in Examples and Comparative Examples, and charge/discharge capacity, and capacity retention and resistance increase rate at high temperatures were evaluated for each of the lithium secondary batteries.

Specifically, each of the positive electrode active materials produced in Examples and Comparative Examples, a carbon black conductive agent, and a PVdF binder were mixed in an NMP solvent in a weight ratio of 97.5:1.0:1.5 to prepare a positive electrode slurry. One surface of an aluminum current collector was coated with the positive electrode slurry, dried at 130°C, and then rolled to prepare a positive electrode. A lithium (Li) metal disk was used as a negative electrode. After an electrode assembly was prepared by interposing a separator between the positive electrode and negative electrode prepared as described above, a lithium secondary battery was prepared by disposing the electrode assembly in a battery case and then injecting an electrolyte solution into the case. In this case, as the electrolyte solution, an electrolyte solution, in which 1 M LiPF6 was dissolved in an organic solvent of EC/EMC/DMC (3/3/4, vol%), was injected to prepare the lithium secondary battery.

The lithium secondary battery prepared as described above was charged at a constant current of 0.1 C to 4.3 V at 25°C and then was discharged at a constant current of 0.1 C until the voltage reached 3.0 V. The charge capacities and discharge capacities are shown in Table 3. In addition, in order to identify the rate characteristics, the lithium secondary battery prepared as described above was charged and discharged at a constant current of 0.1 C at 25 °C in a range of 3.0-4.3 V, charged and discharged at a constant current of 2.0 C, and charged and discharged at a constant current of 0.33 C to obtain a discharge capacity value according to each C-rate, and the percentage of the discharge capacity value during charging and discharging at a constant current of 2.0 C to the discharge capacity during charging and discharging at a constant current of 0.1 C and the percentage of the discharge capacity value during charging and discharging at a constant current of 0.33 C to the discharge capacity during charging and discharging at a constant current of 0.1 C are shown in Table 3 below.

Also, the charge and discharge cycle, in which a battery was charged at a constant current of 0.33 C in a range of 3.0-4.3 V at 45 °C until the voltage reaches 4.3 V and then discharged at a constant current of 0.33 C until the voltage reaches 3.0 V, was repeated 30 times to measure capacity of the lithium secondary battery, and, particularly, a ratio of 30th cycle capacity to 1st cycle capacity was set as a capacity retention and the capacity retention is shown in Table 3 below. In addition, the voltage drop for 60 seconds after the start of discharging in each cycle was measured and the resistance at a high temperature was measured by dividing the voltage drop by the applied current value, and in particular, the increase rate of the 30th cycle resistance value to the 1st cycle resistance value is shown in Table 3 below.

**[Table 3]**

| | Charge capaci ty (mAh/g ) | Discha rge capaci ty (mAh/g ) | 2C/0.1 C (%) | 0.33C/ 0.1C (%) | Capaci ty retent ion (%, 30 cycle) | Resist ance increa se rate (%, 30 cycle) |
|---|---|---|---|---|---|---|
| Example 1 | 229.4 | 207.6 | 87.1 | 95.6 | 97.2 | 128 |
| Example 2 | 231.1 | 209.6 | 87.5 | 95.8 | 97.8 | 114 |
| Example 3 | 229.2 | 207.1 | 86.9 | 95.5 | 97.2 | 128 |
| Comparative | 229.3 | 208.0 | 86.3 | 95.0 | 97.0 | 135 |
| Example 1 | | | | | | |
| Comparative Example 2 | 226.1 | 207.1 | 86.0 | 95.0 | 96.8 | 140 |
| Comparative Example 3 | 227.5 | 207.3 | 86.5 | 95.3 | 96.9 | 137 |
| Comparative Example 4 | 227.1 | 206.2 | 85.8 | 94.1 | 96 | 145 |

It may be confirmed that the batteries including the positive electrode active materials of Examples 1 to 3 produced by the production method according to the present invention have both excellent rate characteristics and capacity retention and low resistance increase rate as compared with the batteries including the positive electrode active materials of Comparative Examples 1 to 4. In particular, it may be confirmed that the battery including the positive electrode active material of Example 2 have the best rate characteristics and capacity retention and the lowest resistance increase rate among them.

### Experimental Example 3: Monocell High-temperature Storage Evaluation and Volume Change Evaluation

The positive electrode active materials produced in Examples and Comparative Examples were used to prepare monocells and storage at a high temperature and volume change were evaluated for each monocell.

Specifically, each of the positive electrode active materials produced in Examples and Comparative Examples, a carbon black conductive agent, and a PVdF binder were mixed in an NMP solvent in a weight ratio of 97.5:1.0:1.5 to prepare a positive electrode slurry. One surface of an aluminum current collector was coated with the positive electrode slurry, dried at 130°C, and then rolled to prepare a positive electrode. A negative electrode slurry prepared by mixing a negative electrode active material, in which natural graphite and artificial graphite were mixed in a ratio of 9:1, with a conductive agent, an additive, and a binder in a weight ratio of 95.6:1.0:2.3:1.1 in an NMP solvent was coated on one surface of a copper current collector, dried, and then rolled to prepare a negative electrode. An electrode assembly was prepared by interposing a separator between the positive electrode and the negative electrode as prepared above, and then the electrodes were properly bonded by laminating at 80 °C, aluminum and nickel tabs were welded, and then the electrodes were placed in an aluminum pouch, and an electrolyte solution was injected thereto to prepare a monocell. In this case, an electrolyte solution in which 0.7 M of LiPF₆ was dissolved in an EC/EMC (3/7, vol%) organic solvent was used as the electrolyte solution.

### - High-temperature Storage Evaluation

### (Initail Hybrid Pulse Power Characterization (HPPC))

The monocell prepared as described above was subjected to charging formation for 3 hours at a current of 0.1 C at 25 °C, and then one side of the pouch was opened to vacuum degas, thereby re-sealing. Then, after charging and discharging were repeated three times with a current of 0.33 C, charging was performed with a current of 0.33 C. Thereafter, after discharging to a SOC of 50, the voltage was measured while applying a current of 2.5 C for 10 seconds, and the resistance value was calculated from the voltage value. The capacity value of Initail HPPC in Table 4 below shows the discharge capacity value of the third cycle.

### (High-temperature Storage RPT)

The monocell for which HPPC evaluation was completed was charged to a SOC of 100 and stored in an oven at 60 °C for a week. One week later, charging and discharging were repeated three times at a current of 0.33 C in a room temperature chamber to measure capacity and resistance values from the discharge data of the third cycle. After the measurement, the cell was stored again in an oven at 60 °C, taken out every one week, and evaluated in the same manner as in week 1.

The high temperature storage evaluation results are shown in Table 4 below.

In Table 4 below, the retention rate represents the ratio of the capacity retention to the capacity at the time of 0 week, and the increase rate represents the ratio of the resistance increase to the resistance at the time of 0 week.

**[Table 4]**

| | 0 week (Ini tial HPPC ) | 1 week | | 2 week | | 3 week | | 4 week | |
|---|---|---|---|---|---|---|---|---|---|
| | Capa city (mAh ) | Capa city (mAh ) | Rete ntio n rate (%) | Capa city (mAh ) | Rete ntio n rate ( | Capa city (mAh ) | Rete ntio n rate (%) | Capa city (mAh ) | Rete ntio n rate (%) |
| Example 1 | 39.3 4 | 38.0 5 | 96.7 3 | 37.6 8 | 95.7 7 | 37.2 7 | 94.7 4 | 37.2 0 | 94.5 6 |
| Example 2 | 38.8 2 | 37.4 8 | 96.5 6 | 37.0 9 | 95.5 4 | 36.5 9 | 94.2 7 | 36.7 3 | 94.6 3 |
| Example 3 | 38.6 2 | 37.1 6 | 96.2 2 | 36.7 8 | 95.2 3 | 36.3 4 | 94.1 0 | 36.5 0 | 94.5 2 |
| Compara tive Example 1 | 39.2 0 | 37.5 8 | 95.8 7 | 97.3 4 | 95.2 6 | 36.9 0 | 94.1 4 | 36.9 9 | 94.3 6 |
| Compara tive Example 2 | 39.5 8 | 37.7 5 | 95.3 9 | 37.4 8 | 94.6 9 | 37.0 1 | 93.5 0 | 37.3 2 | 94.2 8 |
| Compara tive Example 3 | 38.4 4 | 37.2 2 | 96.8 3 | 36.7 9 | 95.7 1 | 36.3 0 | 94.4 4 | 36.3 1 | 94.4 7 |
| Compara tive Example 4 | 38.4 0 | 36.8 8 | 96.0 5 | 36.3 8 | 94.7 5 | 36.1 3 | 94.0 8 | 35.9 3 | 93.5 6 |

| | Resi stan ce (Ω) | Resi stan ce (Ω) | Incr ease rate (%) (%) | Resi stan ce (Ω) | Incr ease rate (%) (%) | Resi stan ce (Ω) | Incr ease rate (%) (%) | Resi stan ce (Ω) | Incr ease rate (%) (%) |
|---|---|---|---|---|---|---|---|---|---|
| Example 1 | 1.74 | 1.85 | 6.33 | 1.94 | 11.5 | 2.13 | 22.4 8 | 2.19 | 25.8 5 |
| Example 2 | 1.72 | 1.83 | 6.42 | 1.91 | 10.8 1 | 2.10 | 21.6 5 | 2.14 | 24.3 4 |
| Example 3 | 1.86 | 2.03 | 9.19 | 2.11 | 13.5 | 2.3 | 23.7 6 | 2.35 | 26.3 8 |
| Compara tive Example 1 | 1.72 | 1.89 | 9.76 | 1.97 | 14.8 1 | 2.16 | 25.5 1 | 2.22 | 29.4 4 |
| Compara tive Example 2 | 1.78 | 1.88 | 5.63 | 1.99 | 11.8 1 | 2.19 | 23.0 4 | 2.26 | 26.9 9 |
| Compara tive Example 3 | 1.73 | 1.83 | 6.28 | 1.92 | 11.4 5 | 2.12 | 22.6 1 | 2.18 | 26.4 9 |
| Compara tive Example 4 | 1.75 | 1.86 | 6.29 | 1.95 | 11.4 3 | 2.18 | 24.5 7 | 2.25 | 28.5 7 |

### - Volume Change Evaluation

The monocell prepared as described above was subjected to charging formation for 3 hours at a current of 0.1 C at 25 °C, and then one side of the pouch was opened to vacuum degas, thereby re-sealing. Then, after charging and discharging were repeated 3 times with a current of 0.33 C, charging was performed with a current of 0.33 C. The charged monocell was opened to separate the negative electrode, and then the positive electrode and the separator were alternately stacked to stack three of each, and then the cells were placed in an aluminum pouch and an electrolyte solution was injected thereto to prepare a cell for volume measurement. In this case, an electrolyte solution in which 0.7 M of LiPF₆ was dissolved in an EC/EMC (3/7, vol%) organic solvent was used as the electrolyte solution. After the prepared cell was stored in an oven at 60 °C, the cell was taken out at one-week intervals to measure the volume change rate at room temperature for 12 weeks, and the volume change rate of each cell compared to the initial cell was shown in Table 5.

**[Table 5]**

| | Monocell volume change (%) | | | | | | | | | | | | |
|---|---|---|---|---|---|---|---|---|---|---|---|---|---|
| | 0 we ek | 1 we ek | 2 we ek | 3 we ek | 4 we ek | 5 we ek | 6 we ek | 7 we ek | 8 we ek | 9 we ek | 10 we ek | 11 we ek | 12 we ek |
| Exa mpl e 1 | 0 | 52 .1 | 64 .2 | 74 .0 | 78 .0 | 79 .5 | 81 .9 | 83 .2 | 84 .9 | 95 .0 | 97 .2 | 98 .6 | 10 1. 1 |
| Exa mpl e 2 | 0 | 34 .9 | 44 .3 | 51 .6 | 54 .7 | 55 .5 | 56 .8 | 58 .5 | 59 .6 | 63 .7 | 64 .9 | 69 .5 | 71 .5 |
| Exa mpl e 3 | 0 | 53 .8 | 68 .9 | 78 .9 | 83 .6 | 86 .3 | 87 .3 | 89 .0 | 91 .0 | 98 .1 | 98 .4 | 10 1. 6 | 10 2. 6 |
| Com par ati ve Exa mpl e 1 | 0 | 66 .3 | 85 .9 | 96 .3 | 99 .8 | 10 2 | 10 4. 1 | 10 5. 6 | 10 6. 2 | 11 4. 0 | 11 5. 8 | 12 4. 3 | 12 2. 1 |
| Com par ati ve Exa | 0 | 69 .6 | 84 .9 | 95 .1 | 99 .8 | 10 1. 5 | 10 3. 5 | 10 5. 3 | 10 7. 3 | 12 2. 5 | 12 2. 8 | 12 7. 0 | 12 6. 1 |
| mpl e 2 | | | | | | | | | | | | | |
| Com par ati ve Exa mpl e 3 | 0 | 63 .3 | 82 .5 | 95 .2 | 10 0. 8 | 10 2. 1 | 10 4. 4 | 10 5. 7 | 10 5. 8 | 10 8. 3 | 11 0. 0 | 11 3. 1 | 11 1. 6 |
| Com par ati ve Exa mpl e 4 | 0 | 65 .1 | 84 .9 | 95 .5 | 10 0. 1 | 10 2. 1 | 10 4. 9 | 10 6. 0 | 10 6. 5 | 10 9. 2 | 11 5. 5 | 12 3. 0 | 12 4. 5 |

It may be confirmed that the monocells including the positive electrode active materials of Examples 1 to 3 produced by the production method according to the present invention have excellent high-temperature storage characteristics and low amount of gas generated from small changes in volume of the monocell as compared with the monocells including the positive electrode active materials of Comparative Examples 1 to 4. In particular, it may be confirmed that the monocell including the positive electrode active material of Example 2 has significantly low amount of gas generated.

Consequently, it may be seen that according to the method for producing a positive electrode active material of the present invention, the surface of the positive electrode active material is controlled through the washing process in step (C), and a coating layer is formed on the positive electrode active material, of which the surface is controlled, in step (D) by using a boron-containing raw material and at least one lithium-containing raw material selected from among LiOH and Li₂CO₃, thereby minimizing the surface degradation of the positive electrode active material which occurs in the washing process, effectively controlling residual lithium, and forming a uniform coating layer on the surface of the positive electrode active material. Thus, it may be seen that the battery using the positive electrode active material produced by the method according to the present invention has excellent performance, particularly, excellent electrochemical performance and thermal stability.

## Claims

1. A method for producing a positive electrode active material, comprising the steps of:
(A) preparing a lithium transition metal oxide;
(B) mixing the lithium transition metal oxide and a first washing solution to first wash and then first filter the lithium transition metal oxide;
(C) simultaneously second washing and second filtering the lithium transition metal oxide through step (B) using a filter device capable of washing and filtering simultaneously with a second washing solution; and
(D) drying the lithium transition metal oxide through step (C), then mixing a coating element-containing raw material with the dried lithium transition metal oxide and heat-treating the mixture to form a coating layer,
wherein the coating element-containing raw material includes a boron-containing raw material and at least one lithium-containing raw material selected from among LiOH, Li₂CO₃, and Li₂O.

2. The method of claim 1, wherein the lithium transition metal oxide contains 70 mol% or more of nickel relative to a total amount of metals other than lithium.

3. The method of claim 1, wherein a content of the second washing solution is from 10 parts by weight to 50 parts by weight with respect to 100 parts by weight of the first washing solution.

4. The method of claim 1, wherein a content of the first washing solution is from 50 parts by weight to 150 parts by weight with respect to 100 parts by weight of the lithium transition metal oxide.

5. The method of claim 1, wherein a content of the second washing solution is from 5 parts by weight to 50 parts by weight with respect to 100 parts by weight of the lithium transition metal oxide.

6. The method of claim 1, wherein a sum of a content of the first washing solution and a content of the second washing solution is from 55 parts by weight to 150 parts by weight with respect to 100 parts by weight of the lithium transition metal oxide.

7. The method of claim 1, wherein the at least one lithium-containing raw material selected from among LiOH, Li₂CO₃, and Li₂O above is added in a weight of from 160 ppm to 500 ppm with respect to the dried lithium transition metal oxide.

8. A positive electrode active material comprising:
a lithium transition metal oxide; and
a coating layer formed on the lithium transition metal oxide,
wherein the coating layer comprises a Li-B-O solid solution, and
the Li-B-O solid solution contains from 50 wt% to 60 wt% of BO₂, 2 wt% to 7 wt% of LiB₂O₃, and 1 wt% to 5 wt% of Li₂B₃O₆.

9. The positive electrode active material of claim 8, wherein the lithium transition metal oxide contains 70 mol% or more of nickel relative to a total amount of metals other than lithium.

10. The positive electrode active material of claim 8, wherein a ratio of LiB₂O₃ content to BO₂ content is from 0.05 to 0.20.

11. The positive electrode active material of claim 8, wherein a ratio of Li₂B₃O₆ content to BO₂ content is from 0.01 to 0.10.

12. A positive electrode comprising the positive electrode active material according to any one of claims 8 to 11.
